# EUROPÄISCHE PATENTSCHRIFT

(11) **EP 1 613 870 B1**
(45) Veröffentlichungstag und Bekanntmachung des Hinweises auf die Patenterteilung: **18.10.2006**
(21) Anmeldenummer: 03780097.6
(22) Anmeldetag: 02.12.2003
(51) Int. Cl.: F16D 7/04

(54) **ÜBERLASTKUPPLUNG**
OVERLOAD COUPLING
ACCOUPLEMENT DE SURCHARGE

(30) Priorität: 16.04.2003 DE 10318820
(43) Veröffentlichungstag der Anmeldung: 11.01.2006
(73) Patentinhaber: Alfred Kärcher GmbH & Co. KG, 71364 Winnenden (DE)
(72) Erfinder: HÄUSSERMANN, Uli, 70734 Fellbach (DE); JEUTTER, Roland, 73663 Berglen (DE)
(74) Vertreter: Karrais, Martin
(86) Internationale Anmeldenummer: PCT/EP2003/013532
(87) Internationale Veröffentlichungsnummer: WO 2004/092605

(56) Entgegenhaltungen:
- EP-A- 1 197 671
- DE-A- 1 575 735
- US-A- 2 730 220
- US-A- 3 552 147
- US-A- 4 599 019

## Beschreibung

Die Erfindung betrifft einen Reinigungskopf für ein Bodenreinigungsgerät mit einer drehbaren Bürstenwalze, die über eine Überlastkupplung mit einem Antriebsmotor gekoppelt ist, wobei die Überlastkupplung nur ein begrenztes Drehmoment überträgt.

Derartige Reinigungsköpfe kommen für Bodenreinigungsgeräte zum Einsatz, mit deren Hilfe eine zu reinigende Bodenfläche gereinigt werden kann, beispielsweise gebürstet und abgesaugt werden kann. Der Reinigungskopf umfaßt eine drehbare Bürstenwalze, die von einem Antriebsmotor angetrieben werden kann. Zwischen der Bürstenwalze und dem Antriebsmotor ist eine Überlastkupplung geschaltet, die nur ein begrenztes Drehmoment überträgt. Damit ist sichergestellt, daß bei Überschreiten eines vorgegebenen Grenzwerts von der Überlastkupplung die Drehmomentübertragung unterbrochen wird. Eine derartige Unterbrechung tritt insbesondere dann auf, wenn die Drehung der Bürstenwalze blockiert ist. Aufgrund der Überlastkupplung kann auch bei einer derartigen Blockade der Bürstenwalze der Antriebsmotor ungestört weiterlaufen, ohne daß er überlastet wird.

Überlastkupplungen werden auch als Drehmomentbegrenzer oder Überlastsicherungen bezeichnet und sind an sich aus der EP 0 108 930 B1 bekannt. Mit ihrer Hilfe kann ein Drehmoment zwischen zwei Maschinenelementen übertragen werden, wobei allerdings bei Auftraten einer Überlast, d. h. bei Überschreiten eines maximalen Grenzwertes des Drehmomentes, die Übertragung unterbrochen wird. Dadurch kann beispielsweise sichergestellt werden, daß bei einer Blockade des Abtriebselementes das Antriebselement nicht beschädigt wird.

Aus der DE 29 34 164 A1 ist eine Überlastkupplung bekannt, bei der mehrere Kupplungselemente in Form von Stahlkugeln mittels einer in axialer Richtung federbelasteten Schubhülse in ihrer Kupplungsstellung gehalten werden, in der sie ein Drehmoment vom Antriebs- auf das Abtriebselement übertragen. Bei Auftreten einer Überlast wird die Schubhülse von den Stahlkugeln mit einer in axialer Richtung wirksamen Schubkraft beaufschlagt, so daß sie in axialer Richtung ausweicht und hierbei eine radiale Ausweichbewegung der Stahlkugeln ermöglichst, wobei dann die Übertragung des Drehmomentes unterbunden ist. Die aus der DE 29 34 164 A1 bekannte Überlastkupplung ist konstruktiv aufwendig.

Aus den US-Patentschriften Nr. 3,552,147 und Nr. 2,730,220 ist eine Überlastkupplung bekannt, die ein Antriebs- und ein Abtriebselement aufweist, welche unter Ausbildung eines Zwischenraumes konzentrisch zueinander angeordnet sind. Der Zwischenraum nimmt ein Kupplungselement auf, das ein Drehmoment überträgt, wobei bei Auftreten einer Überlast das Kupplungselement entgegen der Wirkung einer elastischen Rückstellkraft vom Zwischenraum in einen Ausweichraum überführbar ist. Die Überlastkupplung weist außerdem ein Überlastelement auf, das in Umlaufrichtung des Kupplungselements federbelastet ist und bei Auftreten der Überlast den Ausweichraum für das Kupplungselement freigibt.

Aufgabe der vorliegenden Erfindung ist es, einen Reinigungskopf für ein Bodenreinigungsgerät der eingangs genannten Art derart weiterzubilden, daß die Überlastkupplung einen konstruktiv einfachen Aufbau aufweist, kostengünstig herstellbar ist und eine zuverlässige Betriebsweise aufweist.

Diese Aufgabe wird bei einem Reinigungskopf der gattungsgemäßen Art erfindungsgemäß dadurch gelöst, daß die Überlastkupplung ein Antriebs- und ein Abtriebselement aufweist, die unter Ausbildung eines Zwischenraums konzentrisch zueinander angeordnet sind, wobei der Zwischenraum zumindest ein Drehmoment übertragendes Kupplungselement aufweist, das bei Auftreten einer Überlast entgegen der Wirkung einer elastischen Rückstellkraft vom Zwischenraum in einen Ausweichraum überführbar ist, und daß die Überlastkupplung ein in Umlaufrichtung des Kupplungselements federbelastetes Überlastelement aufweist, das bei Auftreten der Überlast den Ausweichraum für das Kupplungselement freigibt und das in einer Kupplungsstellung des Kupplungselements zwischen dem Kupplungselement und dem Ausweichraum angeordnet ist. Der Einsatz eines in Umlaufrichtung des Kupplungselementes federbelasteten Überlastelements ermöglicht eine konstruktiv besonders einfache und daher kostengünstig herstellbare Konstruktion der Überlastkupplung. Unterhalb eines kritischen Grenzwertes des zu übertragenden Drehmomentes wird vom Antriebselement über das Kupplungselement ein Drehmoment auf das Abtriebselement übertragen. Die Übertragung erfolgt hierbei unter dem Einfluß der in Umlaufrichtung des Kupplungselementes wirksamen Federkraft, mit der das Überlastelement beaufschlagt ist. Das Antriebselement führt ebenso wie das Abtriebselement und das mindestens eine Kupplungselement eine Rotationsbewegung um eine gemeinsame Rotationsachse aus. Überschreitet das Drehmoment einen durch die wirksame Federkraft vorgegebenen Grenzwert, so führt das Überlastelement eine Bewegung relativ zum Antriebselement und/oder zum Abtriebselement aus, wobei es einen Ausweichraum für das Kupplungselement freigibt, in den das Kupplungselement eintreten kann.

Dies hat zur Folge, daß das Kupplungselement von seiner Kupplungsstellung in eine Entkupplungsstellung übergeht und die Drehmomentübertragung zwischen dem Antriebselement und dem Abtriebselement unterbrochen ist. Durch die Überlastkupplung wird auf konstruktiv einfache Weise eine Begrenzung des zu übertragenden Drehmomentes sichergestellt, wobei der kritische Grenzwert des Drehmomentes durch die Federkraft vorgebbar ist, mit der das Überlastelement in Umlaufrichtung beaufschlagt ist. Erfindungsgemäß ist das Überlastelement in einer Kupplungsstellung des Kupplungselementes zwischen dem Kupplungselement und dem Ausweichraum angeordnet. Dies hat den Vorteil, daß der Zugang des Kupplungselementes in den Ausweichraum durch das Überlastelement versperrt ist und bei Auftreten einer Überlast freigegeben wird. Die Überlastkupplung zeichnet sich somit durch eine zuverlässige Betriebsweise aus.

Bei einer bevorzugten Ausführungsform schließt sich der Ausweichraum radial außenseitig an den Zwischenraum an. Da das Kupplungselement ebenso wie das Antriebs- und das Abtriebselement bei der Drehmomentübertragung eine Rotationsbewegung ausführt, hat die radial außenseitige Anordnung des Ausweichraumes den Vorteil, daß der Übergang des Kupplungselementes in den Ausweichraum durch die auf das Kupplungselement einwirkende Fliehkraft erzielbar ist. Die radial außenseitige Anordnung des Ausweichraumes hat außerdem den Vorteil, daß das mindestens eine Kupplungselement bei Auftreten einer Überlast aufgrund der auf das Kupplungselement einwirkenden Fliehkraft selbsttätig in dem Ausweichraum gehalten wird, ohne daß hierzu zusätzliche Halteelemente zum Einsatz kommen müssen.

Als besonders günstig hat es sich erwiesen, wenn das Überlastelement in der Kupplungsstellung des Kupplungselementes an diesem anliegt. Hierbei kann vorgesehen sein, daß das Überlastelement den Ausweichraum in der Kupplungsstellung des Kupplungselementes überdeckt, so daß das Kupplungselement nicht ohne weiteres in den Ausweichraum eintreten kann. Überschreitet das zu übertragende Drehmoment den kritischen Grenzwert, so gibt das Überlastelement den Ausweichraum für das Kupplungselement frei und das Kupplungselement geht in seine Entkupplungsstellung über.

Das Antriebs- und das Abtriebselement bilden zwischen sich einen Zwischenraum aus. Dieser ist vorzugsweise als zwischen dem Antriebs- und dem Abtriebselement angeordneter Ringraum ausgestaltet.

Eine besonders störungsunanfälllige Ausgestaltung läßt sich vorzugsweise dadurch erzielen, daß der Ringraum mehrere Kupplungselemente aufnimmt, denen jeweils ein Überlastelement sowie ein Ausweichraum zugeordnet ist. Zur Übertragung des Drehmomentes vom Antriebs- auf das Abtriebselement kommen hierbei mehrere Kupplungselemente zum Einsatz, die in dem Ringraum angeordnet sind und denen jeweils ein Überlastelement zugeordnet ist, das bei Auftreten einer Überlast für das jeweilige Kupplungselement einen Ausweichraum freigibt.

Vorzugsweise sind die den verschiedenen Kupplungselementen zugeordneten Überlastelemente starr, insbesondere einstückig, miteinander verbunden.

Zur Beaufschlagung des Überlastelementes mit einer Federkraft ist bei einer bevorzugten Ausgestaltung vorgesehen, daß das Überlastelement über eine Torsionsfeder mit dem Antriebs- oder dem Abtriebselement gekoppelt ist. Die Torsionsfeder kann hierbei als Schraubenfeder ausgestaltet sein.

Als günstig hat es sich erwiesen, wenn die Torsionsfeder mit dem Antriebs-oder Abtriebselement lösbar verbindbar ist. Dies ermöglicht es, je nach gewünschtem Grenzwert für das zu überragende Drehmoment eine an diesen Grenzwert angepaßte Torsionsfeder einzusetzen.

Bei einer besonders bevorzugten Ausführungsform ist vorgesehen, daß die Überlastkupplung ein Zwischenteil aufweist, an dem das mindestens eine Überlastelement drehfest gehalten ist und das über die Torsionsfeder mit dem Antriebs- oder Abtriebselement gekoppelt ist. Das Zwischenteil bildet hierbei einen Träger für das mindestens eine Überlastelement. Besonders vorteilhaft ist es, wenn das mindestens eine Überlastelement einstückig mit dem Zwischenteil verbunden ist.

Das Zwischenteil bildet vorzugsweise einen Zwischenflansch aus, und bevorzugt ist das mindestens eine Überlastelement ist in Form eines axial vorstehenden Ansatzes am Zwischenflansch festgelegt. Dies ermöglicht auf konstruktiv einfache Weise eine Ausgestaltung der Überlastkupplung dergestalt, daß das Antriebs- und das Abtriebselement in radialer Richtung zueinander versetzt angeordnet sind und zwischen sich einen Ringraum ausbilden, in den das mindestens eine Überlastelement eintaucht, indem dieses in Form eines axial vorstehenden Ansatzes am Zwischenflansch des Zwischenteiles festgelegt ist. Das Zwischenteil kann hierbei in axialer Richtung versetzt zum Antriebs-und/oder zum Abtriebselement positioniert sein.

Vorzugsweise ist das Abtriebselement sternförmig ausgestaltet und weist eine Vielzahl von schräg zur Umlaufrichtung des Kupplungselementes ausgerichtete Anschlagsflächen auf, an denen in der Kupplungsstellung jeweils ein Kupplungselement anliegt. Als besonders günstig hat es sich hierbei erweisen, das Abtriebselement mit einer im wesentlichen sägezahnförmig ausgestalteten Mantelfläche auszugestalten, an denen mehrere Kupplungselemente in ihrer Kupplungsstellung anliegen, wobei die Kupplungselemente bei Auftreten einer Überlast durch Übergang in ihre Ausweichstellung im Abstand zum Abtriebselement positionierbar sind, so daß die Kupplungselemente relativ zum Abtriebselement frei verdrehbar sind und dadurch eine Drehmomentübertragung unterbunden ist.

Zur Halterung des Abtriebselementes kann vorgesehen sein, daß die Überlastkupplung einen Abtriebsflansch aufweist, an dem das Abtriebselement festgelegt ist, wobei das Abtriebselement einen axial vom Abtriebsflansch abstehenden Kragen ausbildet. Der Kragen weist vorzugsweise eine sägezahnförmige Mantelfläche auf. Hierbei ist es günstig, wenn der Abtriebsflansch parallel zum Zwischenflansch ausgerichtet ist, so daß der das mindestens eine Kupplungselement aufnehmende Zwischenraum in axialer Richtung einerseits durch den Zwischenflansch und andererseits durch den Abtriebsflansch begrenzt ist.

Die radiale Begrenzung des Zwischenraumes kann mittels des Abtriebselementes und des Antriebselementes erfolgen.

Als Antriebselement kommt vorzugsweise ein Zahnrad zum Einsatz, das das Abtriebselement in Umfangsrichtung umgibt und das bei einer vorteilhaften Ausführungsform radial innenseitig den zumindest einen Ausweichraum für das Kupplungselement ausbildet.

Eine besonders kompakte Ausgestaltung wird bei einer bevorzugten Ausführungsform dadurch erzielt, daß die Überlastkupplung ein haubenförmiges Gehäuse aufweist, an dem das Antriebselement festgelegt ist, wobei der Abtriebsflansch einen Deckel für das Gehäuse ausbildet. Vorzugsweise ist das Antriebselement einstückig mit dem haubenförmigen Gehäuse verbunden. Das Gehäuse kann hierbei das mindestens eine Kupplungselement sowie das Überlastelement und das dieses mit einer Federkraft beaufschlagende Federelement, vorzugsweise in Form einer Torsionsfeder, aufnehmen und wird vom Abtriebsflansch überdeckt, der bei einer besonders bevorzugten Ausführungsform auf seiner dem Gehäuse abgewandten Außenseite ein Abtriebszahnrad trägt, wobei es besonders günstig ist, wenn das Abtriebszahnrad einstückig mit dem Abtriebsflansch verbunden ist.

Das Bodenreinigungsgerät, für das der erfindungsgemäße Reinigungskopf vorgesehen ist, kann als Bürststaubsauger ausgestaltet sein, mit dessen Hilfe eine zu reinigende Bodenfläche gebürstet und gleichzeitig abgesaugt werden kann. Hierbei ist es von besonderem Vorteil, wenn der Antriebsmotor sowohl eine Saugturbine des Bodenreinigungsgerätes als auch dessen Bürstenwalze antreibt. Die Bürstenwalze wird zu einer Rotationsbewegung um eine Bürstendrehachse angetrieben. Kommt es zu einer Blockade oder Behinderung der Bürstenwalze, dann ermöglicht es der Einsatz der Überlastkupplung, den Antriebsmotor ungestört weiterbetreiben zu können, ohne daß eine Motorüberlastung auftritt. Der Betrieb der Saugturbine wird folglich von einer Behinderung oder Blockade der Bürstenwalze nicht beeinflußt.

Die nachfolgende Beschreibung einer bevorzugten Ausführungsform der Erfindung dient im Zusammenhang mit der Zeichnung der näheren Erläuterung. Es zeigen:
- Figur 1:: eine schematische, teilweise aufgetrennte Unteransicht eines erfindungsgemäßen Reinigungskopfes für ein Bodenreinigungsgerät mit einer Überlastkupplung
- Figur 2:: eine Schnittansicht der Überlastkupplung längs der Linie 2-2 in Figur 1 bei wirksamer Drehmomentübertragung;
- Figur 3:: eine schaubildliche Darstellung eines Zwischenteiles der Überlastkupplung;
- Figur 4:: eine Schnittansicht entsprechend Figur 2 beim Übergang von Kupplungselementen der Überlastkupplung in einen Ausweichraum und
- Figur 5:: eine Schnittansicht der Überlastkupplung entsprechend Figur 2 nach erfolgtem Übergang der Kupplungselemente in den jeweiligen Ausweichraum.

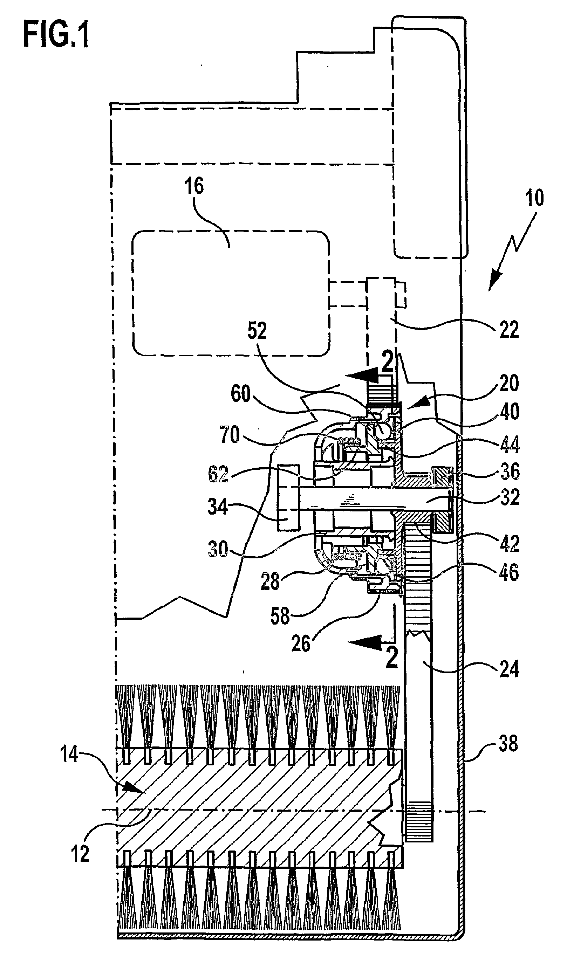

In Figur 1 ist in schematischer Weise ein insgesamt mit dem Bezugszeichen 10 belegter Reinigungskopf dargestellt, der zur Reinigung einer Bodenfläche entlang der Bodenfläche verschoben werden kann, wobei die Bodenfläche gebürstet und gleichzeitig abgesaugt wird. Hierzu umfaßt der Reinigungskopf eine um eine Bürstenachse 12 drehbar gelagerte Bürstenwalze 14, die mittels eines Elektromotors 16 in Drehung versetzt werden kann. Zusätzlich weist der Reinigungskopf in üblicher und deshalb in der Zeichnung nicht dargestellter Weise eine Saugdüse auf, die mit einem dem Fachmann bekannten und deshalb ebenfalls nicht dargestellten Saugaggregat in Strömungsverbindung steht, so daß mittels des Reinigungskopfes 10 die zu reinigende Bodenfläche abgesaugt werden kann. Das Saugaggregat kann in üblicher Weise eine Saugturbine aufweisen, die ebenso wie die Bürstenwalze 12 vom Elektromotor 16 in Drehung versetzt wird.

Die Kopplung der Bürstenwalze 14 mit dem Elektromotor 16 erfolgt unter Zwischenschaltung einer Überlastkupplung 20, die antriebsseitig über einen ersten Zahnriemen 22 mit dem Elektromotor 16 und abtriebsseitig über einen zweiten Zahnriemen 24 mit der Bürstenwalze 12 verbunden ist. Der Elektromotor 16 kann in das Saugaggregat integriert sein und steht über die Überlastkupplung 20 mit der Bürstenwalze zu deren Drehantrieb in Wirkverbindung. Die Saugturbine kann eine Drehzahl von beispielsweise 25000 Umdrehungen pro Minute (U/min) aufweisen, während die Bürstenwalze 12 nur eine Drehzahl von beispielsweise 2800 U/min aufweist. Die nachfolgend im einzelnen beschriebene Überlastkupplung 20 stellt sicher, daß eine mögliche Blockade der Bürstenwalze 12 keine Unterbrechung des Drehantriebes der Saugturbine mittels des Elektromotors 16 zur Folge hat. Die Überlastkupplung 20 dient vielmehr als Überlastsicherung, die bei einer Blockade der Bürstenwalze 12 deren Kopplung mit dem Elektromotor 16 unterbricht.

Der erste Zahnriemen 22 steht mit einem Antriebselement der Überlastkupplung 20 in Form eines Antriebszahnrades 26 in Eingriff, das einstückig mit einem haubenförmigen Gehäuse 28 der Überlastkupplung 20 verbunden ist und den Außenrand des Gehäuses 28 ausbildet. Koaxial zum Antriebszahnrad 26 ausgerichtet weist die Überlastkupplung 20 eine einstückig mit dem Gehäuse 28 verbundene Hülse 30 auf, die frei drehbar an einer das Gehäuse 28 durchgreifenden Lagerachse 32 gehalten ist. Letztere ist mittels endseitig angeordneter Lager 34, 36 drehbar an einem Fahrgestell 38 des Reinigungskopfes 10 gehalten.

Das haubenförmige Gehäuse 28 der Überlastkupplung 20 ist stirnseitig von einem Abtriebsflansch 40 überdeckt, der einstückig mit einem Abtriebszahnrad 42 verbunden ist, das auf der Lagerachse 32 drehfest gehalten ist. Das Abtriebszahnrad 42 steht mit dem zweiten Zahnriemen 24 in Eingriff.

Auf seiner dem Inneren des Gehäuses 28 zugewandten Innenseite trägt der Abtriebsflansch 40 ein axial vorstehendes Abtriebselement, das einstückig mit dem Abtriebsflansch 40 verbunden ist und als sternförmig ausgebildeter Kragen 44 ausgestaltet ist. Der Kragen 44 weist in Umfangsrichtung eine im wesentlichen sägezahnförmig ausgestaltete Mantelfläche 46 auf, die einem Innenrand 48 des Antriebszahnrades 26 zugewandt ist. Die Mantelfläche 46 und der Innenrand 48 definieren zwischen sich einen Ringraum 50, der in Umfangsrichtung gleichmäßig verteilt eine Vielzahl von Kupplungselementen, in der dargestellten Ausführungsform 8 Kupplungselemente, in Form von Stahlkugeln 52 aufnimmt. Jeder Stahlkugel 52 zugeordnet ist in den Innenrand 48 eine Vertiefung 54 eingeformt, die einen Ausweichraum 56 definiert, der sich jeweils einer Stahlkugel 52 benachbart in radialer Richtung an den Ringraum 50 anschließt.

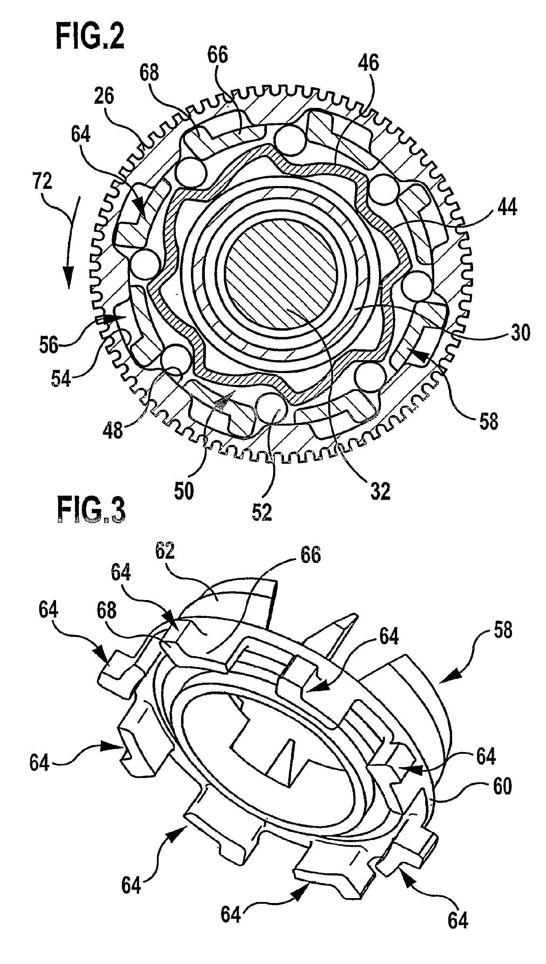

Das Gehäuse 28 der Überlastkupplung 20 umgibt ein Zwischenteil 58, dessen Aufbau sich insbesondere aus Figur 3 ergibt. Es umfaßt einen parallel zum Abtriebsflansch 40 angeordneten Zwischenflansch 60, der auf seiner dem Abtriebsflansch 40 abgewandten Seite einstückig mit einer Ansatzhülse 62 verbunden ist und der an seinem Außenrand in Umfangsrichtung in gleichmäßigem Abstand zueinander angeordnete Überlastelemente in Form axial in Richtung des Abtriebsflansches 40 vorstehender Ansatzstücke 64 trägt, die einstückig mit dem Zwischenflansch 60 verbunden sind und jeweils einer Stahlkugel 52 zugeordnet in den Ringraum 50 eintauchen. Die Ansatzstücke 64 sind im Querschnitte ungefähr L-förmig ausgestaltet und umfassen einen kreisbogenförmigen, konzentrisch zum Innenrand 48 des Antriebszahnrads 42 verlaufenden ersten Schenkel 66 sowie einen radial ausgerichteten, jeweils in einen Ausweichraum 56 eintauchenden zweiten Schenkel 68.

Das Gehäuse 28 umgibt außerdem eine schraubenförmig ausgestaltete Torsionsfeder 70, die einerseits am Gehäuse 28 und andererseits an der Ansatzhülse 62 des Zwischenteiles 58 festgelegt ist.

Während des Betriebes des Reinigungskopfes 10 wird vom Antriebsmotor 16 über den ersten Zahnriemen 22 ein Drehmoment auf das Antriebszahnrad 26 übertragen. Die Umlaufrichtung des Antriebszahnrades 26 ist in den Figuren 2, 4 und 5 durch den Pfeil 72 veranschaulicht. Dieses ist einstückig mit dem Gehäuse 28 verbunden, an dem die Torsionsfeder 70 festgelegt ist. Das Drehmoment wird über die Torsionsfeder 70 auf das Zwischenteil 58 übertragen. Von den in den Ringraum 50 eintauchenden Ansatzstücken 64 des Zwischenteiles 58 wird das Drehmoment auf die am zweiten Schenkel 58 der Ansatzstücke 64 anliegenden Stahlkugeln 52 übertragen, die in ihrer Kupplungsstellung, wie sie in Figur 2 dargestellt ist, den sternförmigen Kragen 44 in Drehung versetzen, so daß das Drehmoment über den Abtriebsflansch 40 auf das Abtriebszahnrad 42 übertragen wird, welches über den zweiten Zahnriemen 24 mit der Bürstenwalze 14 gekoppelt ist.

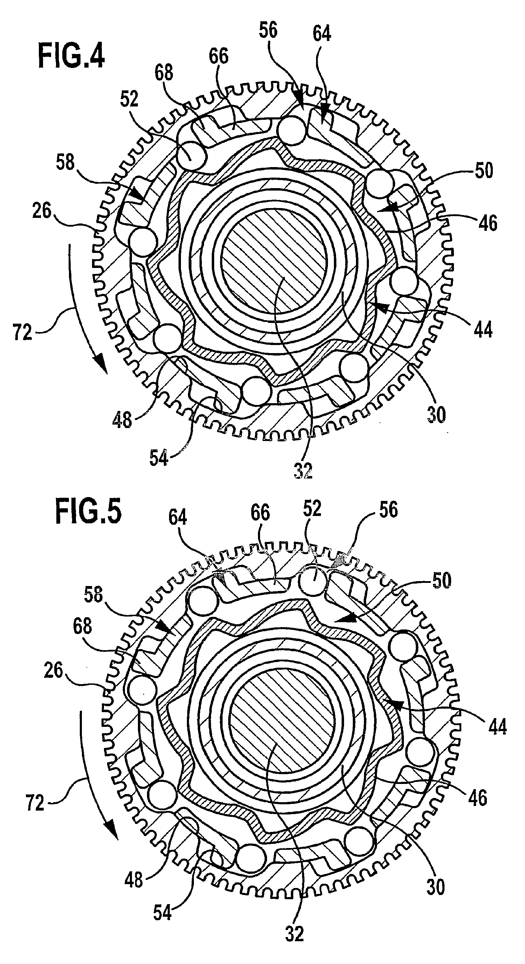

Wie aus Figur 2 deutlich wird, überdecken die L-förmigen Ansatzstücke 64 die Ausweichräume 56, sofern die Stahlkugeln 52 ihre Kupplungsstellung einnehmen. Mit zunehmender Drehmomentbelastung wird die Torsionsfeder 70 gespannt, so daß die Ansatzstücke 64 eine Relativbewegung bezogen auf das Antriebszahnrad 26 ausführen. Dies hat zur Folge, daß die Ansatzstücke 64 die Ausweichräume 56 allmählich freigeben, wie dies in Figur 4 dargestellt ist. Überschreitet das zu übertragende Drehmoment einen durch die Federkraft der Torsionsfeder 70 vorgegebenen Grenzwert, so geben die von der Torsionsfeder 70 federbelasteten Ansatzstücke 64 die Ausweichräume 56 so weit frei, daß die sich in Umlaufrichtung 72 bewegenden Stahlkugeln 52 aufgrund der auf sie einwirkenden Fliehkraft in die jeweils zugeordneten Ausweichräume 56 übergehen, wobei sie in dieser Stellung nicht mehr am Kragen 44 anliegen sondern diesen völlig freigeben. Bei andauernder Rotation des Antriebszahnrades 26 werden die Stahlkugeln 52 aufgrund der einwirkenden Fliehkraft in den jeweiligen Ausweichräumen 56 gehalten, wobei von den Stahlkugeln 52 kein Drehmoment mehr auf den Kragen 44 übertragen wird. Bei Überschreiten eines vorgegebenen Grenzwertes wird also von der Überlastkupplung 20 die Drehmomentübertragung unterbrochen. Eine derartige Unterbrechung tritt insbesondere dann auf, wenn die Drehung der Bürstenwalze 14 blockiert ist. Aufgrund des erfindungsgemäß vorgesehenen Einsatzes der Überlastkupplung 20 beim Reinigungskopf 10 kann auch bei einer derartigen Blockade der Bürstenwalze 14 der Elektromotor 16 des Reinigungskopfes 10 ungestört weiterlaufen, ohne daß er überlastet wird.

## Patentansprüche

1. Reinigungskopf (10) für ein Bodenreinigungsgerät mit einer drehbaren Bürstenwalze (14), die über eine Überlastkupplung (20) mit einem Antriebsmotor (16) gekoppelt ist, wobei die Überlastkupplung (20) nur ein begrenztes Drehmoment überträgt, wobei die Überlastkupplung (20) ein Antriebs- und ein Abtriebselement (26 bzw. 44) aufweist, die unter Ausbildung eines Zwischenraumes (50) konzentrisch zueinander angeordnet sind, wobei der Zwischenraum (50) zumindest ein Drehmoment übertragendes Kupplungselement (52) aufnimmt, das bei Auftreten einer Überlast entgegen der Wirkung einer elastischen Rückstellkraft vom Zwischenraum (50) in einen Ausweichraum (56) überführbar ist, und wobei die Überlastkupplung (20) ein in Umlaufrichtung (72) des Kupplungselementes (52) federbelastetes Überlastelement (64) aufweist, das bei Auftreten der Überlast den Ausweichraum (56) für das Kupplungselement (52) freigibt und **dadurch gekennzeichnet, daß** das Überlastelement (64) in einer Kupplungsstellung des Kupplungselementes (52) zwischen dem Kupplungselement (52) und dem Ausweichraum (56) angeordnet ist.

2. Reinigungskopf nach Anspruch 1, **dadurch gekennzeichnet, daß** der Ausweichraum (56) radial außenseitig an den Zwischenraum (50) anschließt.

3. Reinigungskopf nach Anspruch 1 oder 2, **dadurch gekennzeichnet, daß** das Überlastelement (64) am Kupplungselement (52) anliegt.

4. Reinigungskopf nach einem der voranstehenden Ansprüche, **dadurch gekennzeichnet, daß** der Zwischenraum als zwischen dem Antriebs- und dem Abtriebselement (26 bzw. 44) angeordneter Ringraum (50) ausgestaltet ist.

5. Reinigungskopf nach Anspruch 4, **dadurch gekennzeichnet, daß** der Ringraum (50) mehrere Kupplungselemente (52) aufnimmt, denen jeweils ein Überlastelement (64) sowie ein Ausweichraum (56) zugeordnet ist.

6. Reinigungskopf nach Anspruch 5, **dadurch gekennzeichnet, daß** die den verschiedenen Kupplungselementen (52) zugeordneten Überlastelemente (64) starr miteinander verbunden sind.

7. Reinigungskopf nach einem der voranstehenden Ansprüche, **dadurch gekennzeichnet, daß** das Überlastelement (64) über eine Torsionsfeder (70) mit dem Antriebs- oder Abtriebselement (26 bzw. 44) gekoppelt ist.

8. Reinigungskopf nach Anspruch 7, **dadurch gekennzeichnet, daß** die Torsionsfeder (70) als Schraubenfeder ausgestaltet ist.

9. Reinigungskopf nach Anspruch 7 oder 8, **dadurch gekennzeichnet, daß** die Überlastkupplung (20) ein Zwischenteil (58) aufweist, an dem das mindestens eine Überlastelement (64) drehfest gehalten ist und das über die Torsionsfeder (70) mit dem Antriebs- oder Abtriebselement (26 bzw. 44) gekoppelt ist.

10. Reinigungskopf nach Anspruch 9, **dadurch gekennzeichnet, daß** das mindestens eine Überlastelement (64) einstückig mit dem Zwischenteil (58) verbunden ist.

11. Reinigungskopf nach Anspruch 9 oder 10, **dadurch gekennzeichnet, daß** das Zwischenteil (58) einen Zwischenflansch (60) ausbildet und daß das mindestens eine Überlastelement in Form eines axial vorstehenden Ansatzes (64) am Zwischenflansch (60) festgelegt ist.

12. Reinigungskopf nach einem der voranstehenden Ansprüche, **dadurch gekennzeichnet, daß** das Abtriebselement (44) sternförmig ausgestaltet ist und eine Vielzahl von schräg zur Umlaufrichtung (72) des Kupplungselementes (52) ausgerichtete Anschlagflächen aufweist, an denen in der Kupplungsstellung jeweils ein Kupplungselement (52) anliegt.

13. Reinigungskopf nach einem der voranstehenden Ansprüche, **dadurch gekennzeichnet, daß** die Reinigungskopf (20) einen Abtriebsflansch (40) aufweist, an dem das Abtriebselement festgelegt ist, wobei das Abtriebselement einen axial vom Abtriebsflansch (40) abstehenden Kragen (44) ausbildet.

14. Reinigungskopf nach Anspruch 13, **dadurch gekennzeichnet, daß** die Überlastkupplung (20) ein haubenförmiges Gehäuse (28) umfaßt, an dem das Antriebselement (26) festgelegt ist, wobei der Abtriebsflansch (40) einen Deckel für das Gehäuse (28) ausbildet.

## Claims

1. Cleaning head (10) for a floor cleaning device with a rotatable brush roller (14) coupled to a drive motor (16) via an overload coupling (20), wherein the overload coupling (20) transfers only a limited torque, wherein the overload coupling (20) has a drive element (26) and a driven element (44) arranged concentrically to one another, thereby forming an intermediate space (50), wherein the intermediate space (50) accommodates at least one coupling element (52) transferring torque, the coupling element being movable from the intermediate space (50) into an alternative space (56) contrary to the action of an elastic restoring force when an overload occurs, and wherein the overload coupling (20) has an overload element (64) spring-loaded in the direction of rotation (72) of the coupling element (52), the overload element releasing the alternative space (56) for the coupling element (52) when the overload occurs, **characterized in that** in a coupling position of the coupling element (52), the overload element (64) is arranged between the coupling element (52) and the alternative space (56).

2. Cleaning head as defined in claim 1, **characterized in that** the alternative space (56) adjoins the radial outer side of the intermediate space (50).

3. Cleaning head as defined in claim 1 or 2, **characterized in that** the overload element (64) abuts on the coupling element (52).

4. Cleaning head as defined in any one of the preceding claims, **characterized in that** the intermediate space is designed as an annular space (50) arranged between the drive element (26) and the driven element (44).

5. Cleaning head as defined in claim 4, **characterized in that** the annular space (50) accommodates several coupling elements (52), with each of which an overload element (64) and an alternative space (56) are associated.

6. Cleaning head as defined in claim 5, **characterized in that** the overload elements (64) associated with the various coupling elements (52) are rigidly connected to one another.

7. Cleaning head as defined in any one of the preceding claims, **characterized in that** the overload element (64) is coupled to the drive element (26) or driven element (44) via a torsion spring (70).

8. Cleaning head as defined in claim 7, **characterized in that** the torsion spring (70) is designed as a helical spring.

9. Cleaning head as defined in claim 7 or 8, **characterized in that** the overload coupling (20) has an intermediate part (58), on which the at least one overload element (64) is rotationally fixedly held, and which is coupled to the drive element (26) or driven element (44) via the torsion spring (70).

10. Cleaning head as defined in claim 9, **characterized in that** the at least one overload element (64) is connected in one piece to the intermediate part (58).

11. Cleaning head as defined in claim 9 or 10, **characterized in that** the intermediate part (58) forms an intermediate flange (60), and **in that** the at least one overload element is secured in the form of an axially protruding projection (64) to the intermediate flange (60).

12. Cleaning head as defined in any one of the preceding claims, **characterized in that** the driven element (44) is of a star-shaped design and has a plurality of stop surfaces which are aligned at an angle to the direction of rotation (72) of the coupling element (52), and on each of which a coupling element (52) abuts in the coupling position.

13. Cleaning head as defined in any one of the preceding claims, **characterized in that** the cleaning head (20) has a driven flange (40), to which the driven element is secured, and the driven element forms a collar (44) projecting axially from the driven flange (40).

14. Cleaning head as defined in claim 13, **characterized in that** the overload coupling (20) comprises a dome-shaped housing (28), to which the drive element (26) is secured, and the driven flange (40) forms a cover for the housing (28).

## Revendications

1. Tête de nettoyage (10) pour appareil de nettoyage de sols, ladite tête comportant un rouleau de brossage rotatif (14) qui est couplé à un moteur d'entraînement (16) par l'intermédiaire d'un coupleur à surcharge (20), ledit coupleur à surcharge (20) ne transmettant qu'un couple de rotation limité, le coupleur à surcharge (20) comportant un élément d'entraînement et un élément de sortie (26 respectivement 44) qui sont disposés coaxialement l'un à l'autre en ménageant un espace intermédiaire (50), l'espace intermédiaire (50) recevant au moins un élément de couplage (52) qui transmet un couple de rotation et qui peut être transféré de l'espace intermédiaire (50) dans un espace de dégagement (56), lors de la survenance d'une surcharge, en s'opposant à l'action d'une force de rappel élastique, et le coupleur à surcharge (20) comportant un élément de surcharge (64) qui est contraint par ressort dans le sens de rotation (72) de l'élément de couplage (52), et qui libère l'espace de dégagement (56) destiné à l'élément de couplage (52) lors de la survenance de la surcharge, **caractérisée en ce que** l'élément de surcharge (64) est disposé entre l'élément de couplage (52) et l'espace de dégagement (56) lorsque l'élément de couplage (52) est dans une position de couplage.

2. Tête de nettoyage selon la revendication 1, **caractérisée en ce que** l'espace de dégagement (56) est raccordé, radialement du côté extérieur, à l'espace intermédiaire (50).

3. Tête de nettoyage selon la revendication 1 ou 2, **caractérisée en ce que** l'élément de surcharge (64) porte contre l'élément de couplage (52).

4. Tête de nettoyage selon l'une des revendications précédentes, **caractérisée en ce que** l'espace intermédiaire est conformé en espace annulaire (50) disposé entre l'élément d'entraînement et l'élément de sortie (26 respectivement 44).

5. Tête de nettoyage selon la revendication 4, **caractérisée en ce que** l'espace annulaire (50) reçoit plusieurs éléments de couplage (52) à chacun desquels est associé un élément de surcharge (64) ainsi qu'un espace de dégagement (56).

6. Tête de nettoyage selon la revendication 5, **caractérisée en ce que** les éléments de surcharge (64), qui sont associés aux différents éléments de couplage (52), sont reliés rigidement entre eux.

7. Tête de nettoyage selon l'une des revendications précédentes, **caractérisée en ce que** l'élément de surcharge (64) est couplé à l'élément d'entraînement ou à l'élément de sortie (26 respectivement 44) par l'intermédiaire d'un ressort de torsion (70).

8. Tête de nettoyage selon la revendication 7, **caractérisée en ce que** le ressort de torsion (70) est conformé en ressort hélicoïdal.

9. Tête de nettoyage selon la revendication 7 ou 8, **caractérisée en ce que** le coupleur à surcharge (20) comporte une pièce intermédiaire (58) qui supporte, de façon fixe en rotation, ledit au moins un élément de surcharge (64), et qui est couplée à l'élément d'entraînement ou à l'élément de sortie (26 respectivement 44) par le biais du ressort de torsion (70).

10. Tête de nettoyage selon la revendication 9, **caractérisée en ce que** ledit au moins un élément de surcharge (64) est relié d'une seule pièce avec la pièce intermédiaire (58)

11. Tête de nettoyage selon la revendication 9 ou 10, **caractérisée en ce que** la pièce intermédiaire (58) forme un rebord intermédiaire (60), et **en ce que** ledit au moins un élément de surcharge est conformé en talon (64), saillant axialement, au niveau du rebord intermédiaire (60).

12. Tête de nettoyage selon l'une des revendications précédentes, **caractérisée en ce que** l'élément de sortie (44) est conformé en étoile, et comporte une pluralité de surfaces d'appui qui sont orientées obliquement par rapport au sens de rotation (72) de l'élément de couplage (52), et contre chacune desquelles vient porter un élément de couplage (52) dans la position de couplage.

13. Tête de nettoyage selon l'une des revendications précédentes, **caractérisée en ce que** la tête de nettoyage (10) comporte un flasque de sortie (40) auquel est fixé l'élément de sortie, l'élément de sortie formant une collerette (44) saillant axialement du flasque de sortie (40).

14. Tête de nettoyage selon la revendication 13, **caractérisée en ce que** le coupleur à surcharge (20) comporte un carter (28) en forme de capot, auquel est fixé l'élément d'entraînement (26), le flasque de sortie (40) formant un couvercle pour le carter (28).
